# EUROPÄISCHE PATENTANMELDUNG

(11) **EP 1 760 359 A1**
(43) Veröffentlichungstag der Anmeldung: **07.03.2007**
(21) Anmeldenummer: 06016358.1
(22) Anmeldetag: 04.08.2006
(51) Int. Cl.: F16F 15/32, F16F 15/34

(54) **Wuchtgewicht**

(30) Priorität: 08.08.2005 DE 202005012451 U
(71) Anmelder: Jansen & Buscher GmbH Co. KG, 47809 Krefeld (DE)
(72) Erfinder: Bettchen, Uwe, 42579 Heiligenhaus (DE)
(74) Vertreter: Volpert, Marcus

(57) **Zusammenfassung**

Die Erfindung bezieht sich auf ein Wuchtgewicht zum Auswuchten von Fahrzeugrädern bzw. Felgen mit einem das Gewicht bildenden Gewichtskörper (10). Erfindungsgemäß ist der Gewichtskörper (10) ein Tempergussteil. Gemäß einer besonders bevorzugten Ausführungsform der Erfindung ist der Gewichtskörper in ausschmelzbaren Formen aus Wachs oder Kunststoff im Feingussverfahren hergestellt.

## Beschreibung

Die vorliegende Erfindung betrifft ein Wuchtgewicht zum Auswuchten von Fahrzeugrädern bzw. Felgen mit einem das Gewicht bildenden Gewichtskörper gemäß dem Oberbegriff des Anspruchs 1.

Es sind bisher Wuchtgewichte aus Zink bekannt, die in einem Guss-Pressverfahren hergestellt werden. Hierbei wird der Gewichtskörper aus Zink in einer Form ausgebildet. Gleichzeitig wird die Feder mit eingegossen, so dass nach dem Fertigstellen des Gewichtskörpers das vollständige Wuchtgewicht mit Gewichtskörper und Feder fertig gestellt ist. Derartige Wuchtgewichte werden zum Auswuchten mit der Feder auf ein Felgenhorn geschlagen. Nachteilig ist hierbei jedoch, dass nach dem Aufschlagen des Wuchtgewichtes auf das Felgenhorn nicht überprüft werden kann, ob die Verbindung zwischen Feder und Gewichtskörper beschädigt ist, da der mit dem Gewichtskörper verbundene Teil der Feder innerhalb des Gewichtskörpers, d.h. in diesen eingegossen, angeordnet ist. Etwaige Bruchstellen befänden sich innerhalb des Gewichtskörpers und sind daher von außen nicht sichtbar. Im ungünstigsten Fall wird das Wuchtgewicht durch die Einwirkung von Fliehkräften durch die sich drehende Felge verloren und die Felge bzw. das Fahrzeugrad ist nicht mehr ausgewuchtet und läuft unruhig. Neben unerwünschten Vibrationen kann dies zu einer Beschädigung eines Lagers des Fahrzeugrades führen.

Der Erfindung liegt die Aufgabe zugrunde, ein Wuchtgewicht der o.g. Art bzgl. der Funktionssicherheit zu verbessern und bzgl. der Herstellung zu vereinfachen.

Diese Aufgabe wird erfindungsgemäß durch ein Wuchtgewicht der o.g. Art mit den in Anspruch 1 gekennzeichneten Merkmalen gelöst. Vorteilhafte Ausgestaltungen der Erfindung sind in den weiteren Ansprüchen beschrieben.

Bei einem Wuchtgewicht der o.g. Art ist es erfindungsgemäß vorgesehen, dass der Gewichtsköper ein Tempergussteil ist.

Dies hat den Vorteil, dass ein Gewichtskörper zur Verfügung steht, welcher kaltverformbar ist. Dies ist insbesondere vorteilhaft hinsichtlich der weiteren Bearbeitung des Gewichtsköpers sowie bei der Anwendung als Auswuchtgewicht, da der Gewichtskörper auch bei mechanischer Krafteinwirkung nicht bricht, sondern sich allenfalls plastisch verformt.

Zweckmäßigerweise weist das Wuchtgewicht zusätzlich eine Feder zum Befestigen des Wuchtgewichtes an einem Fahrzeugrad bzw. Felgenhorn auf. Die Feder ist an der Oberfläche des Gewichtskörpers befestigt. Mit anderen Worten liegt die Feder außen an der Oberfläche des Gewichtskörpers an und ist dort mit geeigneten Mitteln befestigt.

Beispielsweise ist die Feder mittels Nieten, Schrauben, Kleben und/oder Schweißen an der Oberfläche des Gewichtskörpers befestigt.

In einer bevorzugten Ausführungsform weist der Gewichtskörper an seiner Oberfläche wenigstens eine Erhebung auf, die durch wenigstens eine Ausnehmung in der Feder greift und in der Art einer Niete die Feder an dem Gewichtskörper befestigt. Diese Erhebung ist beispielsweise einstückig mit dem Gewichtskörper, insbesondere rund, oval, elliptisch oder dreieckig, ausgebildet.

Gemäß einer besonders bevorzugten Ausführungsform der Erfindung ist der Gewichtskörper in ausschmelzbaren Formen aus Wachs oder Kunststoff im Feingussverfahren hergestellt. Ein derartiger Gewichtskörper kann mit hoher Maßgenauigkeit und Obertlächenqualität hergestellt werden. Das Gussstück ist in aller Regel gratfrei und besitzt eine sehr glatte Oberfläche. Dadurch lassen sich aufwändige Nachbearbeitungsverfahren entweder völlig vermeiden oder auf ein Minimum reduzieren. Besondere Vorteile besitzt das Feingussverfahren bei kompliziert gestalteten Gewichtskörpern oder bei solchen Gewichtskörpern, welche nur mit hohem Aufwand bearbeitet werden können.

Die Erfindung wird im Folgenden anhand der Zeichnung näher erläutert. Diese zeigt in:
- Fig. 1: eine bevorzugte Ausführungsform eines Gewichtskörper eines erfindungsgemäßen Wuchtgewichtes in Aufsicht,
- Fig. 2: den Gewichtskörper von Fig. 1 in Schnittansicht,
- Fig. 3: eine bevorzugte Ausführungsform einer Feder eines erfindungsgemäßen Wuchtgewichtes in Aufsicht,
- Fig. 4: die Feder von Fig. 3 in Seitenansicht,
- Fig. 5: eine bevorzugte Ausführungsform eines erfindungsgemäße Wuchtgewicht im Zusammenbau mit dem Gewichtskörper gemäß Fig. 1 und 2 sowie der Feder gemäß Fig. 3 und 4 in Aufsicht und
- Fig. 6: das Wuchtgewicht gemäß Fig. 5 in Schnittansicht.

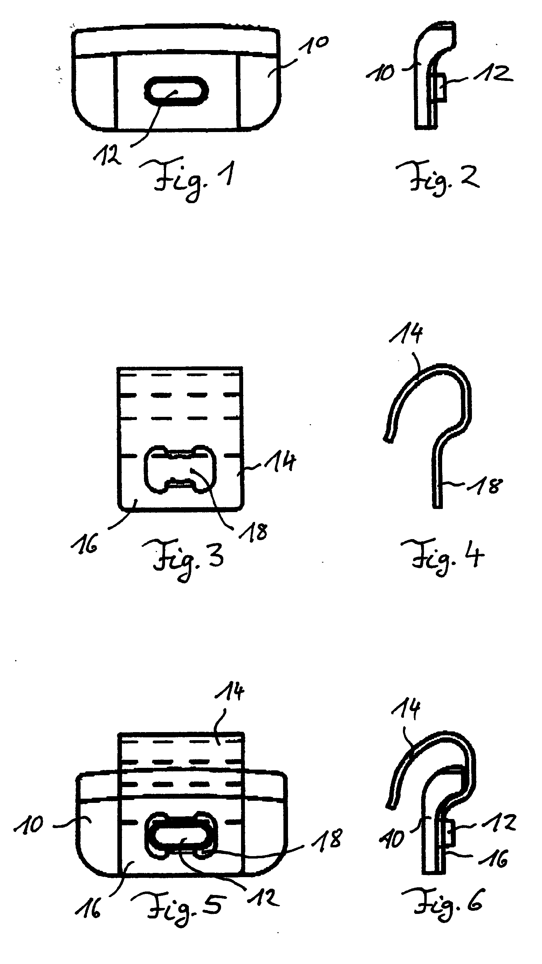

Eine beispielhafte, bevorzugte Ausführungsform eines erfindungsgemäßen Wuchtgewichtes ist in den Fig. 1 bis 6 dargestellt.

Fig. 1 und 2 veranschaulichen einen Gewichtskörper 10 für eine bevorzugte Ausführungsform eines erfindungsgemäßen Wuchtgewichtes. Der Gewichtskörper 10 weist an seiner Oberfläche eine Erhebung 12 auf, welche einstückig mit dem Gewichtskörper ausgebildet ist. Der Gewichtskörper 10 ist ein Tempergussteil, d.h. der Gewichtskörper 10 ist mit einem Tempergussverfahren hergestellt. Bei dem Temperguss wird nach dem Gießvorgang durch lang anhaltendes Glühen (Tempern, Anlassen) über eine längere Zeitdauer, beispielsweise mehrere Tage, aus einem Rohguss, der dem Hartguss entspricht, ein Tempergussteil hergestellt. Dieses Tempergussteil unterscheidet sich gegenüber Grauguss durch seine Zähigkeit und Bearbeitbarkeit, insbesondere ist das Tempergussteil kaltverformbar. Der Kohlenstoff wird durch das Tempern flockenförmig als Temperkohle ausgeschieden. Der Temperguss vereinigt in sich die guten Gießeigenschaften des Graugusses mit einer nahezu stahlähnlichen Zähigkeit, ist schweißbar und gut zerspanbar.

Temperguss, oder schmiedbarer Guss, wird aus weiß erstarrendem Gusseisen in Formen gegossen und danach durch bestimmte Glühverfahren entkohlt oder in seiner Kohlenstoffform so umgewandelt, dass er zäh, hämmerbar, leicht bearbeitbar und in beschränktem Maß schmiedbar wird. Der Entwurf März 1926 zu DIN 1692 definiert Temperguss folgendermaßen: Temperguss ist ein Eisen-Kohlenstoff-Gusswerkstoff, dessen Zusammensetzung besonders hinsichtlich des C- und Si-Gehaltes so eingestellt ist, dass das Graugussstück bei werkstoffgerechter Konstruktion graphitfrei erstarren muss, d.h. dass der gesamte Kohlenstoff im Temperrohguss in gebundener Form als Eisencarbid (Zementit) vorliegt. Der Temperrohguss wird einer Glühbehandlung unterworfen, die bei verfahrensgerechter Gestaltung der Gussstücke zum restlosen Zerfall dieses Eisencarbids führt. Die chemische Zusammensetzung des Temperrohgusses und die Art des temperatur- und zeitabhängigen Glühverfahrens bestimmen den Gefügeaufbau des Werkstoffes und damit dessen Eigenschaften und Anwendungsmöglichkeiten.

Beim so genannten "weißen" od. deutschen Temperguss werden aus Gusseisen (mit 2,5 - 3,5% C) gegossene kleine Massenteile von Hammerschlag oder Roteisenstein (Kömung z.B. 6 - 9 mm) umgeben und in sog. Glühkisten 70 bis 120 Stunden lang auf 900 bis 1.000°C erhitzt ("Tempern"). Hierbei wird der Kohlenstoff des Eisens in der obersten 2 bis 3 mm dicken Zone des Gussstückes mit Hilfe des Sauerstoffs vom Hammerschlag oder Eisenoxid zu Kohlendioxid verbrannt und entfernt. Das Gussstück besteht dann an seiner Oberfläche aus weichem, zähmen, schmiedbaren, kohlenstoffarmem Stahl (Ferrit). Im Inneren des Gussstückes wird das Fe₃C des Gusseisens durch die Erhitzung beim Tempern in Eisen und sog. Temperkohle zersetzt, die sich im Gegensatz zum groblamelligen Graphit in Form von sehr kleinen runden Einschlüssen abscheidet. Der Kern (also das Innere des Gusstückes unter der entkohlten Außenzone) ist fest, hart, aber weniger zäh. Er besteht aus Temperkohle und Perlit. Die Brinellhärte beträgt beim Kern 150 bis 170 Kg/mm², in der weicheren Außenzone etwa 125 kg/mm². Der dünnwandige, weiße Temperguss ist nach dem Tempern bis zu einem gewissen Grad schmiedbar. Durch das Tempern wird bei Massenartikeln die mühsame Schmiedung von Hand vermieden und man erhält aus dem spröden Gusseisen trotzdem eine Art Stahl. Beim schwarzen Temperguss ("Schwarzguss" od. amerikanischer Guss) packt man die aus Gusseisen gegossenen Werkstücke in Quarzsand ein und erhitzt das Ganze 60 bis 100 Std. auf 900 bis 950°C. Hierbei reagiert der Quarzsand nicht mit und das Gussstück wandelt sich überall gleichmäßig in Perlit u. feinst verteilte Temperkohle (durch Hitzezersetzung des Fe₃C entstanden, das im Roheisen Sprödigkeit verursacht) um. Nach dieser Hitzebehandlung werden die Gussstücke ebenfalls zäh u. hämmerbar. Die Eigenschaften sind hier innen und an der Oberfläche gleich.

Fig. 3 und 4 veranschaulichen eine Feder 14 für eine bevorzugte Ausführungsform eines erfindungsgemäßen Wuchtgewichtes. Diese Feder 14 ist als Biegeteil oder Biegestanzteil ausgebildet. Die Feder 14 dient zum Befestigen des Wuchtgewichtes an einem Felgenhorn eines Fahrzeugrades (nicht dargestellt) an geeigneter Stelle, um dieses Fahrzeugrad auszuwuchten. Die Feder 14 weist an einem mit dem Gewichtsköper 10 zu verbindenden Ende 16 eine Ausnehmung 18 auf. Diese Ausnehmung ist derart ausgebildet, dass die Feder 14 mit dieser Ausnehmung 18 auf die Erhebung 12 des Gewichtsköpers 10 aufsteckbar ist.

Der zusammengesteckte Zustand von Gewichtsköper 10 und Feder 14 ist in Fig. 5 und 6 dargestellt. Nach dem Aufstecken wird die Feder 14 mittels Vernieten unter Verwendung der Erhebung 12 dauerhaft und unlösbar verbunden. Hierzu wird die Erhebung 12 durch Krafteinwirkung auf das freie Ende der Erhebung 12 derart kaltverformt, dass sich eine nietenartige Verbreiterung der Erhebung 12 ergibt, die breiter ist als die Ausnehmung 18 in der Feder 14. Durch die Kaltverformung der Erhebung wird ggf. auch der Werkstoff des Gewichtsköpers 10 im Bereich der Erhebung 12 an seinem Übergang in den Gewichtsköper 10 verbreitert, so dass die verformte Erhebung 12 an einem inneren Rand der Ausnehmung 18 anliegt und die Feder 14 fixiert. Dies wird beispielsweise dadurch unterstützt, dass die Erhebung 12 ausgehend vom Gewichtsköper 10 in Richtung des freien Endes der Erhebung 12 sich konisch erweiternd ausgebildet ist.

Gemäß einer besonders bevorzugten Ausführungsform der Erfindung ist der Gewichtskörper in ausschmelzbaren Formen aus Wachs oder Kunststoff im sogenannten Feingussverfahren hergestellt. Damit ist der Gewichtskörper gemäß dieser Ausführungsform ein Gussstück, welches als Feingussteil ausgebildet ist.

Ein Verfahren zum Herstellen eines Wuchtgewichtes zum Auswuchten von Fahrzeugrädern bzw. Felgen mit einem das Gewicht bildenden Gewichtskörper und einer Feder zum Befestigen des Wuchtgewichtes an einem Fahrzeugrad bzw. Felgenhorn ist dadurch gekennzeichnet, dass der Gewichtskörper und die Feder voneinander getrennt hergestellt werden und die Feder an einer Oberfläche des fertigen Gewichtskörpers befestigt wird.

Dies hat den Vorteil, dass die Verbindung zwischen Feder und Gewichtskörper auch nach dem Befestigen des Wuchtgewichtes an einem Fahrzeugrad bzw. Felgenhorn optisch auf etwaige Beschädigungen hin, die ggf. die Haltekraft an dem Fahrzeugrad bzw. Felgenhorn beeinträchtigen, überprüft werden kann.

Beispielsweise wird die Feder an der Oberfläche des Gewichtskörpers angenietet, angeschraubt, angeklebt, und/oder angeschweißt.

In einer besonders bevorzugten Ausführungsform wird an der Oberfläche des Gewichtskörpers eine Erhebung und in der Feder eine Öffnung ausgebildet, wobei die Feder mit ihrer Ausnehmung auf die Erhebung aufgesteckt und die Feder durch Vernieten mit der Erhebung an dem Gewichtskörper befestigt wird.

Dadurch, dass der Gewichtskörper mit einem Tempergußverfahren hergestellt wird, steht ein Gewichtskörper aus einem kaltverformbaren Werkstoff zur Verfügung. Zweckmäßigerweise wird die Feder als Biege oder Biegestanzteil hergestellt.

## Patentansprüche

1. Wuchtgewicht zum Auswuchten von Fahrzeugrädern bzw. Felgen mit einem das Gewicht bildenden Gewichtskörper (10),
**dadurch gekennzeichnet,**
**dass** der Gewichtsköper (10) ein Tempergussteil ist.

2. Wuchtgewicht nach Anspruch 1, **dadurch gekennzeichnet, dass** dieses zusätzlich eine Feder (14) zum Befestigen des Wuchtgewichtes an einem Fahrzeugrad bzw. Felgenhorn aufweist.

3. Wuchtgewicht nach Anspruch 2, **dadurch gekennzeichnet, dass** die Feder (14) an der Oberfläche des Gewichtskörpers (10) befestigt ist.

4. Wuchtgewicht nach Anspruch 2 oder 3, **dadurch gekennzeichnet, dass** die Feder (14) mittels Nieten, Schrauben, Kleben und/oder Schweißen an der Oberfläche des Gewichtskörpers (10) befestigt ist.

5. Wuchtgewicht nach wenigstens einem der Ansprüche 2 bis 4, **dadurch gekennzeichnet, dass** der Gewichtskörper (10) an seiner Oberfläche wenigstens eine Erhebung (12) aufweist, die durch wenigstens eine Ausnehmung (18) in der Feder greift und in der Art einer Niete die Feder (14) an dem Gewichtskörper (10) befestigt.

6. Wuchtgewicht nach Anspruch 5, **dadurch gekennzeichnet, dass** die Erhebung (12) einstückig mit dem Gewichtskörper (10) ausgebildet ist.

7. Wuchtgewicht nach Anspruch 5 oder 6, **dadurch gekennzeichnet, dass** die Erhebung (12) rund, oval, elliptisch oder dreieckig ausgebildet ist.

8. Wuchtgewicht nach einem der vorhergehenden Ansprüche, **dadurch gekennzeichnet, dass** der Gewichtskörper (10) in ausschmelzbaren Formen aus Wachs oder Kunststoff im Feingussverfahren hergestellt ist.
